# EUROPÄISCHE PATENTSCHRIFT

(11) **EP 1 762 593 B1**
(45) Veröffentlichungstag und Bekanntmachung des Hinweises auf die Patenterteilung: **29.04.2009**
(21) Anmeldenummer: 06018188.0
(22) Anmeldetag: 31.08.2006
(51) Int. Cl.: C08L 13/00, C08K 5/098

(54) **Vernetzbare Zusammensetzungen, daraus erhältliche thermoplastische Elastomere und deren Verwendung**
Crosslinkable Compositions, thermoplastic elastomers obtained therefrom and their use
Compositions réticulabales, élastomères thermoplastiques à partir de celles-ci et leur utilisation

(30) Priorität: 06.09.2005 DE 102005042265
(43) Veröffentlichungstag der Anmeldung: 14.03.2007
(73) Patentinhaber: LANXESS Deutschland GmbH, 51369 Leverkusen (DE)
(72) Erfinder: Achten, Dirk, Dr., 50735 Köln (DE); Wrana, Claus, Dr., 51061 Köln (DE); Varnhorn, Kay, 51375 Leverkusen (DE); Pask, Stephen, Dr., 41542 Dormagen (DE); Fischer, Carsten, Dr., 51519 Odenthal (DE)

(56) Entgegenhaltungen:
- DE-A1- 10 102 047
- US-A- 2 849 426
- US-A- 4 826 910
- US-A- 4 952 634
- US-A1- 2003 181 558

## Beschreibung

Die Erfindung betrifft vernetzbare Zusammensetzungen auf der Basis von thermoplastischen Polyamiden und Elastomeren, wobei diese Zusammensetzungen als Vernetzungssystem ausschließlich spezielle organische Salze von Metallionen enthalten, sowie die Herstellung solcher vernetzbaren Zusammensetzungen. Die Erfindung betrifft ferner ein Verfahren zur Vernetzung dieser Zusammensetzungen unter Erhalt eines thermoplastischen Elastomers mit einer Elastomer- und einer Thermoplastphase, wobei die Elastomerphase durch die organischen Salze der Metallionen vernetzt ist. Die Erfindung betrifft ferner die thermoplastischen Elastomere als solche sowie deren Verwendung zur Herstellung von Formteilen.

Es besteht ein großer Bedarf an thermoplastisch verarbeitbaren Elastomeren, die die Verarbeitungseigenschaften von Thermoplasten mit den elastischen Eigenschaften von irreversibel vernetzten Materialien (häufig auch als Thermosetmaterialien bezeichnet) z.B. in Form von herkömmlich vernetzten Gummiprodukten, verbinden.

Dem Fachmann sind verschiedene Klassen sogenannter thermoplastischer Elastomere bekannt.

Eine Klasse dieser thermoplastischen Elastomere sind die sogenannten "**TPE".** Hierbei handelt es sich um thermoplastische Elastomere auf der Basis von Polymeren, welche gleichzeitig a) über eine kristalline und/oder amorphe Phase mit einem Schmelzpunkt bzw. Glaspunkt oberhalb der Raumtemperatur sowie b) über eine amorphe Phase mit einem Glaspunkt unterhalb der Raumtemperatur verfügen, wobei die Vernetzung der Phasen a) und b) über die thermoplastische Phase a) erfolgt, und es sich um eine **physikalische Vernetzung** handelt.

Eine weitere Klasse der thermoplastischen Elastomere sind die sogenannten "**TPV".** Dies sind thermoplastische Vulkanisate, die Mischungen aus a) kristallinen und/oder amorphen Polymeren mit einem Schmelzpunkt bzw. Glaspunkt oberhalb der Raumtemperatur und b) amorphen Polymeren mit einem Glaspunkt unterhalb der Raumtemperatur enthalten, wobei die amorphen Polymere b) **chemisch vernetzt** sind, und diese Mischung in einer co-kontinuierlichen Phasenmorphologie oder mit der festen Phase als kontinuierlicher Phase vorliegt.

Von der Anwender-Seite gesehen besteht ein großer Bedarf für Produkte, die eine Hochtemperaturbeständigkeit mit Ölbeständigkeit und Barriereeigenschaften kombinieren. Bei den herkömmlichen Produkten handelt es sich bisher vor allem um thermoplastische Vulkanisate auf Basis von Polyamiden, Polyestern oder Polypropylen als thermoplastischer Phase. In diesen TPV liegt eine chemischenVernetzung der elastomeren Phase zum Beispiel durch Harze, Peroxide, Schwefel, Diamine oder Epoxide vor. Bei diesen Systemen muss zum Erhalt der gewünschten Eigenschaft der thermoplastischen Verarbeitbarkeit die Voraussetzung einer kontinuierlichen oder zumindest co-kontinuierlichen Phase des Thermoplastmaterials erfüllt sein, wobei die elastomere Phase vom Thermoplasten weitgehend umschlossen sein muss. Um dieses zu erreichen, wird die elastomere Phase während des Herstellungsprozesses chemisch irreversibel vernetzt. Für die gewünschten Produkte, die bei sehr hohen Temperaturen Einsatz finden sollen, ist der Einsatz von hochschmelzenden Thermoplastphasen mit einem Schmelzpunkt oder Glaspunkt > 200°C eine notwendige Voraussetzung, wodurch die Wahl der Vernetzungssysteme und Herstellungsverfahren jedoch erheblich eingeschränkt wird. Häufig ist deshalb bisher ein mehrstufiger Prozess zur Erreichung der gewünschten Eigenschaften und der notwendigen Phasenmorphologien notwendig. Die Reproduzierbarkeit der Ergebnisse ist dementsprechend schlecht.

Dem eingesetzten Vernetzungssystem kommt ein erheblicher Einfluss zu.

Als Hauptklasse herkömmlicher Vernetzungssysteme sind radikalische Vernetzungssysteme bekannt, welche unter Einsatz von organischen Peroxiden arbeiten, wobei zusätzlich Coagenzien zur Verbesserung der Radikalausbeute eingesetzt werden.

Eine weitere Klasse noch stärker verbreiteter Vernetzungssysteme sind die Schwefelvemetzungssysteme. Diese können, wie dem Fachmann hinlänglich bekannt, in einer großen Zahl verschiedener Zusammensetzungen eingesetzt werden.

Weniger gebräuchlich sind Vernetzungssysteme basierend auf einer Aminvernetzung mittels sterisch gehinderter Amine wie z.B. [Diakl] (Hexamethylendiamincarbamat) in Kombination mit [DOTG] (Di-orthotolylguanidin). Diese Vernetzungssysteme werden gezielt für die Vernetzung von Carboxylgruppen-haltigen Elastomeren wie z.B. AEM (z.B. in Form von VAMAC^{®}) empfohlen.

Alle vorgenannten Vernetzungssysteme bewirken eine irreversible Vernetzung der elastomeren Phase.

Die Vernetzung mittels Peroxiden hat für die oben gewünschte Möglichkeit einer Vernetzung oberhalb von 200°C den substanziellen Nachteil, dass die Vernetzung unter Luftausschluß erfolgen muß, um eine Verringerung der Vernetzungseffizienz durch eine Reaktion mit Luftsauerstoff zu verhindern, die sich z.B. in der Ausbildung klebriger Oberflächen ausdrückt. Ein weiterer wesentlicher Aspekt der Peroxidvernetzung ist die feste Beziehung zwischen Temperatur und Zerfallsgeschwindigkeit. Während die Erreichung einer geeigneten Vernetzungsgeschwindigkeit bei einer tieferen Temperatur (<180°C) durch Wahl eines geeigneten Peroxids einfacher möglich ist, ist es sehr schwierig, geeignete, dass heißt selektiv mit der Kautschukphase reagierende Peroxide für kontrollierte Vernetzungsreaktionen bei oder oberhalb von 200°C zu finden. In der Gummiindustrie gebräuchliche Peroxide für die Vernetzung von Kautschuken sind für solche Hochtemperaturreaktionen aufgrund explosionsartiger Zerfallskinetiken nicht geeignet. Auf diese Weise kann eine homogene Verteilung der Peroxide in der elastomeren Phase während des Mischprozesses von Thermoplast und Elastomerphase bei hohen Temperaturen nicht gewährleistet werden. Andere Hochtemperaturperoxide zeigen oft eine nur unbefriedigende Vernetzungseffizienz mit den in Frage kommenden Kautschuken oder sind kommerziell nicht erhältlich. Produkte, die mittels peroxidischer Vernetzung erzeugt werden, zeichnen sich darüberhinaus häufig durch eine starke Geruchsbelästigung aus, die von den Zerfallsprodukten der Peroxide herrührt.

Hochtemperaturvernetzungen können außerdem durch chemische Kondensations- oder Additionsprozesse von reaktiven Polymeren, die z.B. Hydroxy- oder Carboxygruppen als funktionelle Gruppen aufweisen, mittels reaktiver chemischer Vernetzer auf Basis von di-, tri- oder multifunktionellen Epoxiden, Aminen, Carbonsäuresalzen oder Isocynaten durchgeführt werden. Nachteilig ist hier die häufig erhebliche Toxizität der eingesetzten Produkte.

Die notwendigen Bestandteile für eine typische Schwefelvernetzung sind vielfältig und umfassen Schwefel, Schwefelspender, Beschleuniger, Retarder, Reversionsschutzmittel und weitere Substanzen. Vulkanisationstemperaturen jenseits von 180°C sind jedoch aufgrund der bei so hohen Temperaturen sehr schwierigen Reaktions- und Prozesskontrolle nicht gebräuchlich.

Bei der Herstellung von thermoplastischen Vulkanisaten auf der Basis von PP und EPDM mittels sogenannter Harzvernetzung werden Phenol-Formaldehydharze häufig zusammen mit Zinndichlorid (SnCl₂) als Lewissäure-Katalysator eingesetzt. Obwohl sehr verbreitet, haben diese Systeme den gravierenden Nachteil, stark verfärbte Produkte mit häufig gelbbräunlichem Farbton zu erzeugen und korrosive Chlorverbindungen freizusetzen. Sie sind damit in ihrer Anwendbarkeit limitiert.

Vernetzungsprozesse während einer Hochtemperaturmischung von Elastomeren oder von Elastomeren und Thermoplasten werden unter dem Begriff reaktive Vernetzung geführt. Dieser Schritt ist wesentlich für die Herstellung von thermoplastischen Vulkanisaten.

Eine weitere neue Klasse thermoplastischer Elastomere stellen die **ionisch vernetzten thermoplastischen Elastomere** dar, die auch als thermoplastische Ionomere bezeichnet werden. Hierbei handelt es sich um Mischungen von ionomeren Thermoplasten und Carboxyl- oder Sulfonsäuregruppen-enthaltenden Elastomeren meist auf Basis von Polypropylen (PP)- und Polyethylen (PE)-basierten Copolymeren, deren Phasen über ionische Bindungen angekoppelt werden. Derartige ionisch verknüpfte thermoplastische Elastomere sind bereits bekannt.

So beschreibt z.B. die WO-A-03/020820 Blends aus einem Polyamid mit einem hydrierten carboxylierten Nitril-Kautschuk auf Basis eines Nitril-Monomers, eines Dien-Comonomers sowie einer ungesättigten Carbonsäure als Termonomer.

Es ist in der Literatur bereits beschrieben, zur Vernetzung von Carboxylgruppen tragenden Elastomeren Mischungen einzusetzen aus bekannten Vernetzungssystemen, z.B. solchen auf Basis von Schwefel-Verbindungen, die eine kovalente Vernetzung verursachen, und Metallsalzen, die eine zusätzliche ionische Vernetzung bewirken.

Aus US-A-4,508,867 sind vulkanisierbare kautschukartige Zusammensetzungen bekannt, die ein kristallines Polyamid sowie ein synthetisches, kautschukartiges Polymer auf Basis von Acrylnitril oder Methacrylnitril, Butadien und einer oder mehrerer α,β-ungesättigter Carbonsäuren als Monomere umfassen und ferner auch eine Kombination aus aktiven Schwefel-Vulkanisations-Mitteln sowie nicht-polymeren Zusatzstoffen auf der Basis von Metallsalzen/-verbindungen enthalten. Bei diesen nicht-polymeren Zusatzstoffen werden 0,1-15 Gew.%, bezogen auf das Polyamid, eines Zusatzstoffes eingesetzt, der aus den Halogeniden von Lithium, Magnesium, Calcium und Zink ausgewählt ist, und etwa 1-10 Gew.Teile, bezogen auf 100 Gew.Teile aller polymerer Materialien, eines Zusatzstoffes, der aus den Oxiden und Hydroxiden von Magnesium, Calcium, Barium und Zink und den Peroxiden von Calcium und Zink ausgewählt ist. Es wird in US-A-4,508,867 ausgeführt, dass diese Zusatzstoffe den Schmelzpunkt des Polyamids beeinflussen oder auch die Kompatibilität des Polyamids und des kautschukartigen Polymers.

Aus US-A-6,566,463 sind spezielle Metall-Salze ungesättigter Carbonsäuren bekannt, die zusammen mit Peroxiden zur Vernetzung von Kautschuken geeignet sind. Die speziellen Metall-Salze werden erhalten durch Umsetzung von 2 Mol einer monobasischen ungesättigten Carbonsäure und 2 Mol einer dibasischen ungesättigten Carbonsäure mit 3 Mol eines divalenten Metalloxids.

Bekannt ist aus der Literatur auch der alleinige Einsatz von zweiwertigen Metallsalzen zur Erzielung einer ionischen Vernetzung:

Aus Polymer Engineering and Science, May 1999, Vol.39, No 5, 963-973 sind ionomere thermoplastische Elastomere auf der Basis ionomerer Polyblends von Zinksalzen maleinisierten Polypropylens ("Zn-mPP") und maleinisierten EPDM Kautschuks ("ZnmEPDM") bekannt. Die ionische Vernetzung an den Grenzflächen wird durch die Zugabe von Zinkoxid und Stearinsäure bewirkt.

Aus Journal of Applied Polymer Science, Vol. 86, 2887-2897 (2002**)** ist es bekannt, ein Polypropylen-basiertes Elastomer mit Maleinsäureanhydrid zu pfropfen und das erhaltene maleinisierte Produkt durch Zusatz von Metallsalzen wie Aluminiumstearat, Magnesiumstearat, Calciumstearat, Zinkstearat, Kaliumstearat, Natriumstearat, Magnesiumhydroxid, Zinkoxid oder Zinksulfid zu vernetzen.

In Polymer 41 (2000) 787-793 wird ferner beschrieben, dass sich ionomere Polyblends aus Zinkoxid-neutralisiertem carboxylierten Nitril-Kautschuk ("Zn-XNBR") und Zinkoxid neutralisiertem Poly(ethylen-co-acrylsäure) ("Zn-PEA") als ionomere thermoplastische Elastomere verhalten. Auch hier wird die ionische Vernetzung an den Grenzflächen durch die Zugabe von Zinkoxid und Stearinsäure bewirkt

Auch J. Applied Polymer Science, Vol 87, 805-813 (2003**)** beschreibt, carboxylierten Nitril-Kautschuk unter Einsatz von Calciumoxid und Stearinsäure ionisch zu vernetzen. Gemäß Polym. Int. 49, 1653-1657 (2000**)** wird carboxylierter Nitril-Kautschuk unter Einsatz von Calciumoxid, Magnesiumoxid oder Zinkoxid in Gegenwart von Dioctylphthalat oder Dimethylsulfoxid als Weichmacher in ein ionisch vernetztes Elastomer überführt.

Bei dieser Vernetzung der Elastomer-Phase ausschließlich durch Oxide zweiwertiger Metalle und deren organische Salze werden jedoch Polymerblends erhalten, die sich in dynamisch belasteten Produkten durch hohe Verlustfaktoren und damit eine unerwünschte hohe dynamische Erwärmung auszeichnen. Bei der Vernetzung von Blends verschiedener thermoplastischer und elastischer Ionomere werden zwar für die Vernetzung mit Zinkoxid und organischen Säuren Synergien beobachtet. Hier wird jedoch bereits eine partielle Dissoziation der Ionenverbindungen im Temperaturbereich von 170°C-180°C angenommen, die eine Anwendung in Hochtemperatur-stabilen Ionomeren verhindert.

Aus Journal of Elastomers and Plastics, Vol. 33, 196-210 ist es bekannt, chlorosulfoniertes Polyethylen (CSM) mit Aluminiumoxid in Gegenwart von Stearinsäure umzusetzen, wobei ein ionisches Elastomer erhalten wird. Beschrieben wird ferner eine "gemischte Vernetzung" (auch als "mixed crosslinking" bezeichnet), d.h. die Bildung eines Vulkanisates mit zwei verschiedenen Vernetzungsformen, unter Einsatz von Dicumylperoxid (DCP) sowie von Aluminiumoxid/Stearinsäure. Für die Herstellung von Blends ist ebenfalls ein mixed crosslinking unter Einsatz einer Kombination aus DCP und Aluminiumoxid/Stearinsäure erforderlich: Durch intensives Mischen eines Masterbatches aus CSM/Aluminiumoxid/Stearinsäure und eines Masterbatches aus Ethylen-Vinylacetat-Copolymer (EVA)/DCP wird ein entsprechendes Blend erhalten. Für die Durchführung der rein ionischen Vernetzung unter Einsatz von Aluminiumoxid/Stearinsäure wird jedoch dargestellt, dass Materialien mit unzureichenden Druckverformungseigenschaften erhalten werden.

Es stellt sich damit ausgehend vom bekannten Stand der Technik die Aufgabe, vulkanisierbare Zusammensetzungen auf Basis eines nicht peroxidischen Vernetzungssystems zu finden, aus denen bei hohen Temperaturen thermoplastische Elastomere hergestellt werden können, die dabei einfach handhabbar und gesundheitlich unbedenklich sind sowie ferner eine hohe Verfahrenssicherheit erlauben. Die durch die Vernetzung zugänglichen thermoplastischen Elastomere sollen in ihren Eigenschaften bezüglich Hochtemperatur- und Ölbeständigkeit sowie ihren mechanischen Eigenschaften, Geruch und Eigenfarbe den auf dem Markt befindlichen Produkten gleichwertig oder überlegen und dabei einfach und kostengünstig zu fertigen sein.

Gelöst wird diese Aufgabe durch die Bereitstellung vernetzbarer Zusammensetzungen auf der Basis von thermoplastischen Polymeren sowie Carboxyl-Gruppen haltigen Elastomeren, die zusätzlich spezielle organische Salze von Metallionen sowie ein Vernetzungssystem enthalten.

**Gegenstand der Erfindung** sind vernetzbare Zusammensetzungen enthaltend
(1) ein oder mehrere thermoplastische Polymere
(2) ein oder mehrere Elastomere, die Carboxyl-Gruppen aufweisen, sowie
(3) als Vernetzungssystem ein oder mehrere Salze der allgemeinen Formel (I)

   (R^{y-})_{x/y}M^{x+} (I)

   worin
   - R^{y-}: einen C₁-C₂₆ Kohlenwasserstoff-Rest darstellt, der y Carboxylgruppen enthält
   - y: die Werte 1, 2, 3, oder 4 darstellen kann,
   - x: 3 oder 4 ist und
   - M: ein drei- oder vierwertiges Metall ist,
wobei als thermoplastische Polymere Polyamide mit einer Schmelztemperatur oder Glastemperatur > 90°C eingesetzt werden.

Bevorzugt sind vernetzbare Zusammensetzungen enthaltend

| | | |
|---|---|---|
| (1) | 10 - 90 Gew.% | eines oder mehrerer thermoplastischer Polymere |
| (2) | 89 - 9 Gew.% | eines oder mehrerer Elastomere, die Carboxyl-Gruppen aufweisen, und |
| (3) | 1 - 40 Gew.% | eines Vernetzungssystems, bei dem es sich um ein oder mehrerer Salze der allgemeinen Formel (I) |

(R^{y-})_{x/y}M^{x+} (I)

handelt, worin
- R^{y-}: einen C₁-C₂₆ Kohlenwasserstoff-Rest darstellt, der y Carboxylgruppen enthält,
- y: die Werte 1, 2, 3, oder 4 darstellen kann,
- x: 3 oder 4 ist und
- M: ein drei- oder vierwertiges Metall ist,
wobei die Summe der drei Komponenten (1), (2) und (3) 100 Gew.% ergibt.

Besonders bevorzugt sind vernetzbare Zusammensetzungen enthaltend

| | | |
|---|---|---|
| (1) | 15 - 80 Gew.% | eines oder mehrerer thermoplastischer Polymere |
| (2) | 83 - 18 Gew.% | eines oder mehrerer Elastomere, die Carboxyl-Gruppen aufweisen, und |
| (3) | 2 - 30 Gew.% | eines Vernetzungssystems, bei dem es sich um ein oder mehrere der Salze der allgemeinen Formel (I) |

(R^{y-})_{x/y}M^{x+} (I)

handelt, worin
- R^{y-}: einen C₁-C₂₆ Kohlenwasserstoff-Rest darstellt, der y Carboxylgruppen enthält,
- y: die Werte 1, 2, 3, oder 4 darstellen kann,
- x: 3 oder 4 ist und
- M: ein drei- oder vierwertiges Metall ist,
wobei die Summe der drei Komponenten (1), (2) und (3) 100 Gew.% ergibt.

Bevorzugt handelt es sich bei M in der allgemeinen Formel (I) um B, Al, Sc, Y, Fe, Sn, Pb, Ti, Zn oder Hf.

Bei dem Rest R^{y-} in der allgemeinen Formel (I) handelt es sich um einen C₁-C₂₆ Kohlenwasserstoff-Rest, der y Carboxylgruppen enthält, wobei y den Wert 1, 2, 3 oder 4 annehmen kann. Der C₁-C₂₆-Kohlenwasserstoff-Rest kann geradekettig oder verzweigt, gesättigt oder auch ein- oder mehrfach ungesättigt, acyclisch oder cyclisch, aliphatisch oder aromatisch sein.

R^{y-} steht bevorzugt für Formiat, Acetat, Acrylat, Methacrylat, Propionat, Lactat, Crotonat, Pivalat, Capronat, Sorbinat, Caprylat, Oleat, Caprinat, Laurinat, Linolat, Palminat, Stearat, Resinat, Hexacosanat, Icopentanat, Eicosapentanat, Oxalat, Malonat, Maleinat, Fumarat, Succinat, Glutarat, Adipat, Salicylat, Pimelinat, Terephthalat, Isophathalat, Citronat, Pyromellitat.

Das Vernetzungssystem (3) der erfindungsgemäßen vernetzbaren Zusammensetzung kann ein oder mehrere Salze der allgemeinen Formel (I) enthalten. Eine besonders bevorzugte vernetzbaren Zusammensetzung zeichnet sich dadurch aus, dass sie als Vernetzungssystem ausschließlich die Komponente (3), d.h. keine weiteren Vernetzungssysteme enthält.

Als **thermoplastische Polymere (1)** können alle üblichen thermoplastischen Polymere mit einer Schmelztemperatur oder Glastemperatur > 90 °C, bevorzugt > 120°C eingesetzt werden. Bevorzugt sind **Polyamide, Polyester, Polyimide und Polypropylen.** Diese thermoplastischen Polymere können in einer dem Fachmann bekannten Weise beispielsweise mit Glasfasern, Weichmachern, Füllstoffen, und Stabilisatoren modifiziert sein. Der Begriff "thermoplastische Polymere" als Komponente (1) der erfindungsgemäßen vulkanisierbaren Zusammensetzung kann also im Sinne dieser Anmeldung gegebenenfalls auch für eine Mischung aus dem eigentlichen thermoplastischen Polymer und beispielsweise den genannten Hilfs- oder Zusatzstoffen stehen. In Bezug auf die Angaben zu den Mengen der Komponente (1) in der erfindungsgemäßen vulkanisierbaren Zusammensetzung bedeutet dies insbesondere, dass an den zuvor genannten 10-90 Gew.% bzw. bevorzugt 15-80 Gew.% eines oder mehrerer **thermoplastischer Polymere** der oder die eigentlichen Thermoplasten wiederum nur einen gewissen Anteil bilden und der Rest durch Glasfasern, Weichmacher, Füllstoffe, Stabilisatoren ergänzt ist.

Als **Polyamide** können in der erfindungsgemäßen Zusammensetzung Homo- oder Copolymere eingesetzt werden, die Monomerbausteine in der Polymerhauptkette enthalten, die über Amidbindungen (-C(=O)-NH-) verknüpft sind. Beispiele für einsetzbare Polyamide sind Polycaprolactam (Nylon 6), Polylaurolactam (Nylon 12), Polyhexamethylenadipamid (Nylon 6,6). Polyhexamethylenazelamid (Nylon 6,9), Polyhexamethylensebacamid (Nylon 6,10), Polyhexamethylenisophthalamid (Nylon 6, IP), Polyaminoundecansäure (Nylon 11), Polytetramethylenadipamid (Nylon 4,6) sowie Copolymere von Caprolactam, Hexamethylendiamin und Adipinsäure (Nylon 6,66) and Aramide wie Polyparaphenylenterephthalamid. Die Mehrzahl der Polyamide hat Erweichungspunkte und Schmelzpunkte im Bereich von 120 bis 260°C. Die Polyamide haben bevorzugt ein hohes Molekulargewicht und sind kristallin.

Als **Polyester** können in der erfindungsgemäßen Zusammensetzung Homo- oder Copolymere eingesetzt werden, die Monomerbausteine in der Polymerhauptkette aufweisen, die über Ester-Gruppen (-C(=O)-O-) verbunden sind. Eingesetzt werden können als Homopolyester beispielsweise die Hydroxycarbonsäure-Typen oder Dihydroxy-Dicarbonsäure Typen. Erstere können durch Polykondensation einer ω-Hydroxycarbonsäure oder durch ringöffnende Polymerisation cyclischer Ester (Lactone) hergestellt werden, letztere durch Polykondensation zweier komplementärer Monomere, z.B. einem Diol und einer gesättigten oder ungesättigten Dicarbonsäure.

Eingesetzt werden können Poly(ethyleneterephthalat), Poly(oxy-1,2-ethandiyl-oxycarbonyl-1,4-phenylencarbonyl), Poly(1,4-dimethylencyclohexaneterephthalat), Poly(butylenterephthalat), Poly(tetramethyleneterephthalat), Poly(oxy-1,4-butandiyl-oxycarbonyl-1,4-phenylencarbonyl), (siehe auch Ullmann's Encyclopedia of Industrial Chemistry Copyright © 2002 DOI: 10.1002/14356007.a21_227 Article Online Posting Date: June 15, 2000).

Als **Polyimide** können in der erfindungsgemäßen Zusammensetzung Homo- oder Copolymere eingesetzt werden, die Monomerbausteine in der Polymerhauptkette enthalten, die über Imid-Gruppen verbunden sind. Die Imid-Gruppen können dabei als lineare oder cyclische Einheiten vorliegen. Die Schmelzpunkte der geeigneten Polyimide liegen im Bereich 150-260°C. (siehe auch Ullmann's Encyclopedia of Industrial Chemistry Copyright © 2002 by Wiley-VCH Verlag GmbH & Co. KGaA.DOI: 10.1002/14356007.a21_253).

Als **Polypropylene** können in der erfindungsgemäßen Zusammensetzung alle Polypropylene mit einem Schmelzpunkt > 150°C und einem hohen Anteil an Kristallinität eingesetzt werden.

Als **Polyether** können in der erfindungsgemäßen Zusammensetzung Homo- oder Copolymere eingesetzt werden, die Monomerbausteine in der Polymerhauptkette enthalten, die über Ether Gruppen (C-O-C) verbunden sind und sich durch einen Schmelzpunkt größer als ungefähr 150°C und kleiner als ungefähr 260°C auszeichnen

Als **Elastomere (2)** können ein oder mehrere, typische, Carboxyl-Gruppen haltige Elastomere eingesetzt werden.

Von entscheidender Bedeutung ist, dass das Elastomer an die Polymerketten gebundene Carboxyl-Gruppen enthält.

Üblicherweise enthält das Elastomer 0,5-15 Gew. %, bezogen auf 100 Gew.% Elastomer (2), gebundener Carboxyl-Gruppen.

Bevorzugt enthält das Elastomer 0,5 - 10 Gew.%, besonders bevorzugt 1-7 Gew.% und insbesondere 2-5 Gew.% gebundener Carboxyl-Gruppen, bezogen auf 100 Gew.% Elastomer (2).

Diese Carboxyl-Gruppen können dabei statistisch entlang der Polymerketten des Elastomers verteilt sein oder aber sich auch an den Kettenenden befinden.

Als Carboxylgruppen-haltige Elastomere kommen beispielsweise die folgenden in Frage:
1. Carboxylierter Nitrilkautschuk (auch als XNBR abgekürzt)
2. Hydrierter, carboxylierter Nitrilkautschuk (auch als HXNBR abgekürzt),
3. Maleinsäureanhydrid ("MAH") gepfropfte Kautschuke auf Basis von EPM, EPDM, HNBR, EVA, EVM, SBR, NR oder BR,
4. Carboxylierter Styrol-Butadienkautschuk (auch als XSBR abgekürzt)
5. AEM mit freien Carboxylgruppen,
6. ACM mit freien Carboxylgruppen
sowie beliebige Mischungen der zuvor genannten Polymere.

Die Mooney-Viskosität (ML 1+4 @100 °C) der eingesetzten Elastomere (2) liegt üblicherweise in einem Bereich von 1-140, bevorzugt in einem Bereich von 5 bis 100, besonders bevorzugt in einem Bereich von 30 bis 90.

Die genannten Elastomere sind im Handel frei verfügbar. Geeignete Elastomere können zum Beispiel im Rubber Handbook, SGF 10^{th} Edition gefunden werden oder sind zugänglich unter den Handelsnamen Krynac^{®} (der Firma Lanxess Deutschland GmbH), Therban^{®} (der Firma Lanxess Deutschland GmbH), Exxelor^{®} (der Firma Exxon), Fusabond^{®} (der Firma DuPont), Elvaloy^{®} (der Firma DuPont), Levapren^{®} (der Firma Lanxess Deutschland GmbH), Baystal^{®} (der Firma Lanxess Deutschland GmbH), Vamac^{®} (der Firma DuPont), HyTemp^{®} (der Firma Nippon Zeon), Elvax^{®} (der Firma DuPont).

Die genannten Elastomere sind ferner auch über dem Fachmann aus der Literatur bekannte Herstellverfahren zugänglich.

Unter dem **carboxylierten Nitrilkautschuk** (auch als XNBR bezeichnet) werden Kautschuke verstanden, bei denen es sich um Terpolymere aus mindestens einem ungesättigten Nitril, mindestens einem konjugierten Dien und mindestens einem Carboxyl- oder Carboxylat-Gruppen enthaltenden weiteren Termonomeren handelt.

Als α,β-ungesättigtes Nitril kann jedes bekannte α,β-ungesättigte Nitril eingesetzt werden, bevorzugt sind (C₃-C₅)-α,β-ungesättigte Nitrile wie Acrylnitril, Methacrylnitril, Ethacrylnitril oder Mischungen davon. Besonders bevorzugt ist Acrylnitril.

Das konjugierte Dien kann von jeder Natur sein. Bevorzugt werden (C₄-C₆) konjugierte Diene eingesetzt. Besonders bevorzugt sind 1,3-Butadien, Isopren, 2,3-Dimethylbutadien, Piperylen oder Gemische daraus. Insbesondere bevorzugt sind 1,3-Butadien und Isopren oder Gemische daraus. Ganz besonders bevorzugt ist 1,3-Butadien.

Als Carboxyl- oder Carboxylat-Gruppen enthaltende Termonomere können beispielsweise α,β-ungesättigte Carbonsäuren oder deren Ester eingesetzt werden. Bevorzugt sind dabei Fumarsäure, Maleinsäure, Acrylsäure und Methacrylsäure als Säuren sowie deren Ester Butylacrylat, Butylmethacrylat, Etylhexylacrylat und Etylhexylmethacrylat. Andere Monomere, die eingesetzt werden können, sind ungesättigte Dicarbonsäuren oder Derivate davon, wie Ester oder Amide.

Die Anteile an konjugiertem Dien und α,β-ungesättigtem Nitril in den XNBR Polymeren können in weiten Bereichen schwanken. Der Anteil des oder der Summe der konjugierten Diene liegt üblicherweise im Bereich von 40 bis 90 Gew.% und bevorzugt im Bereich von 55 bis 75 Gew. %, bezogen auf das Gesamtpolymer. Der Anteil des oder der Summe der α,β-ungesättigten Nitrile liegt üblicherweise bei 9,9 bis 60 Gew.-%, bevorzugt bei 15 bis 50 Gew.-%, bezogen auf das Gesamtpolymer. Die zusätzlichen Monomere liegen in Mengen von 0,1 bis 40 Gew.%, bevorzugt 1 bis 30 Gew.-%, bezogen auf das Gesamtpolymer, vor. Die Anteile aller Monomere summieren sich jeweils zu 100 Gew.% auf.

Die Herstellung von XNBR durch Polymerisation der vorgenannten Monomere ist dem Fachmann hinlänglich bekannt und in der Literatur (z.B. EP-A-0 933 381 oder US-A-5,157,083; Nippon Zeon) umfangreich beschrieben.

**Hydrierte carboxylierte Nitrilkautschuke** (auch als HXNBR abgekürzt) sind auf verschiedenen Wegen zugänglich. Möglich ist es beispielsweise ein HNBR mit Carboxylgruppen-haltigen Verbindungen zu pfropfen. Sie können ferner durch Hydrierung von carboxylierten Nitrilkautschuken erhalten werden. Derartige hydrierte carboxylierte Nitrilkautschuke sind beispielsweise in WO-A-01/77185 beschrieben.

Es ist prinzipiell möglich, die Hydrierung unter Einsatz homogener oder heterogener Hydrierkatalysatoren durchzuführen.

Wie in WO-A-01/77185 beschrieben ist es beispielsweise möglich, die Umsetzung mit Wasserstoff unter Einsatz homogener Katalysatoren, wie z.B. dem als "Wilkinson"-Katalysator ((PPh₃)₃RhCl) bekannten oder anderen durchzuführen. Verfahren zur Hydrierung von Nitrilkautschuk sind bekannt. Rhodium oder Titan werden üblicherweise als Katalysatoren verwendet, wobei aber auch Platin, Iridium, Palladium, Rhenium, Ruthenium, Osmium, Kobalt oder Kupfer entweder als Metall, oder aber bevorzugt in Form von Metallverbindungen eingesetzt werden können (siehe z.B.US-A-3,700,637, DE-PS-2 539 132, EP-A- 134 023, DE-OS- 35 41 689, DE-OS- 35 40 918, EP-A-298 386, DE-OS- 35 29 252, DE-OS- 34 33 392, US-A-4,464,515 und US-A-4,503,196).

Geeignete Katalysatoren und Lösungsmittel für eine Hydrierung in homogener Phase werden im folgenden beschrieben und sind auch aus DE-A-25 39 132 und der EP-A-0 471 250 bekannt.

Die selektive Hydrierung kann beispielsweise in Gegenwart eines Rhodium-haltigen Katalysators erreicht werden. Einsetzbar ist beispielsweise ein Katalysator der allgemeinen Formel

(R¹ₘB)₁ RhXₙ

worin R¹ gleich oder verschieden sind und eine C₁-C₈ Alkylgruppe, eine C₄-C₈ Cycloalkylgruppe, eine C₆-C₁₅ Aryl-Gruppe oder eine C₇-C₁₅ Aralkylgruppe darstellen. B ist Phosphor, Arsen, Schwefel oder eine Sulfoxid-Gruppe S=O, X ist Wasserstoff oder ein Anion, vorzugsweise Halogen und besonders bevorzugt Chlor oder Brom, 1 ist 2,3 oder 4, m ist 2 oder 3 und n ist 1,2 oder 3, bevorzugt 1 oder 3. Bevorzugte Katalysatoren sind Tris(triphenylphosphin)-rhodium(I)-chlorid, Tris(triphenylphosphin)-rhodium(III)-chlorid und Tris(dimethylsulfoxid)-rhodium(III)-chlorid sowie Tetrakis(triphenylphosphin)-rhodium-hydrid der Formel (C₆H₅)₃P)₄RhH und die entsprechenden Verbindungen, in denen das Triphenylphosphin ganz oder teilweise durch Tricyclohexylphosphin ersetzt wurde. Der Katalysator kann in kleinen Mengen benutzt werden. Eine Menge im Bereich von 0,01-1 Gew.%, bevorzugt im Bereich von 0,03-0,5 Gew.% und besonders bevorzugt im Bereich von 0,1-0,3 Gew.% bezogen auf das Gewicht des Polymers ist geeignet.

Üblicherweise ist es sinnvoll, den Katalysator zusammen mit einem Co-Katalysator zu verwenden, der ein Ligand der Formel R¹ₘB ist, wobei R¹, m und B die zuvor genannten Bedeutungen besitzen. Bevorzugt ist m gleich 3, B gleich Phosphor und die Reste R¹ können gleich oder verschieden sein. Bevorzugt handelt es sich um Co-Katalysatoren mit Trialkyl, Tricycloalkyl, Triaryl, Triaralkyl, Diaryl-monoalkyl, Diaryl-monocycloalkyl, Dialkylmonoaryl, Dialkyl-monocycloalkyl oder Dicycloalkyl-monoaryl.

Beispiele für Co-Katalysatoren finden sich beispielsweise in US-A-4,631,315. Bevorzugter Co-Katalysator ist Triphenylphosphin. Der Co-Katalysator wird bevorzugt in Mengen in einem Bereich von 0,3-5 Gew.%, bevorzugt im Bereich von 0,5-4 Gew.% eingesetzt, bezogen auf das Gewicht des zu hydrierenden Nitrilkautschuks. Bevorzugt ist ferner das Gewichtsverhältnis des Rhodium-haltigen Katalysators zum Co-Katalysator im Bereich von 1:3 bis 1:55, bevorzugt im Bereich von 1:5 bis 1:45. Bezogen auf 100 Gewichtsteile des zu hydrierenden Nitrilkautschuks werden geeigneterweise 0,1 bis 33 Gewichtsteile des Co-Katalyators, bevorzugt 0,5 bis 20 und ganz besonders bevorzugt 1 bis 5 Gewichtsteile, insbesondere mehr als 2 aber weniger als 5 Gewichtsteile Co-Katalysator bezogen auf 100 Gewichtsteile des zu hydrierenden Nitrilkautschuks eingesetzt.

Die praktische Durchführung dieser Hydrierung ist dem Fachmann aus US-A-6,683,136 hinlänglich bekannt. Sie erfolgt üblicherweise, indem man den zu hydrierenden Nitrilkautschuk in einem Lösungsmittel wie Toluol oder Monochlorbenzol bei 100 - 150 °C und einem Druck von 50 - 150 bar für 2 - 10 h mit Wasserstoff beaufschlagt.

Unter "Hydrierung" oder "hydriert" wird im Rahmen dieser Anmeldung eine Umsetzung der im carboxylierten Nitrilkautschuk ursprünglich vorhandenen Doppelbindungen zu mindestens 50 %, bevorzugt 75 %, besonders bevorzugt 85 % verstanden.

Bei Einsatz heterogener Katalysatoren zur Herstellung hydrierter carboxylierter Nitrilkautschuke durch Hydrierung der entsprechenden carboxylierten Nitrilkautschuke handelt es sich üblicherweise um geträgterte Katalysatoren auf der Basis von Palladium.

Der Begriff **"Elastomer" als Komponente (2)** der erfindungsgemäßen vulkanisierbaren Zusammensetzung kann im Sinne dieser Anmeldung gegebenenfalls auch für eine Mischung aus dem oder den eigentlichen Elastomer(en) und weiteren Hilfs- oder Zusatzstoffen sein. In Bezug auf die Angaben zu den Mengen der Komponente (2) in der erfindungsgemäßen vulkanisierbaren Zusammensetzung bedeutet dies analog zu den Ausführungen für die thermoplastischen Polymere insbesondere, dass an den zuvor genannten 89-9 Gew.% bzw. bevorzugt 83 - 18 Gew.% eines oder mehrerer Elastomere (2) das oder die eigentlichen Elastomere wiederum nur einen gewissen Anteil bilden und der Rest durch die weiteren Hilfs- oder Zusatzstoffe ergänzt ist.

Als optionale weitere Komponenten können in der Elastomerphase beispielsweise enthalten sein:
- in der Kautschukindustrie gängige Füllstoffe wie Ruße, Kieselsäure, Talkum, Kreide oder Titandioxid,
- Nicht mit Carboxylgruppen funktionalisierte Elastomere
- Weichmacher,
- Verarbeitungshilfsmittel,
- Stabilisatoren und Antioxidantien
- Farbstoffe oder
- Fasern oder Faserpulpe

Die Verwendung eines Antioxidans in den erfindungsgemäßen Zusammensetzungen kann gewünscht sein. Beispiele üblicher Antioxidantien schließen p-Dicumyldiphenylamin (Naugard^{®} 445), Vulkanox^{®}DDA (styrolisiertes Diphenylamin), Vulkanox^{®}ZMB2 (Zink-Salz von Methylmercapto-benzimidazol), Vulkanox^{®}HS (polymerisiertes 1,2-dihydro-2,2,4-trimethylchinolin) und Irganox^{®} 1035 (Thiodiethylen-bis(3,5-di-tert.-butyl-4-hydroxy)hydrocinnamat oder Thiodiethylen-bis(3-(3,5-di-tert.-butyl-4-hydroxyphenyl) propionat).

In einer bevorzugten Ausführungsform handelt es sich bei der vulkanisierbaren Zusammensetzung um eine solche, bei der als Komponente (1) ein Polyamid und als Komponente (2) HXNBR oder XNBR eingesetzt wird.

**Gegenstand der Erfindung** ist ferner ein Verfahren zur Herstellung dieser vernetzbaren Zusammensetzungen, indem man alle Komponenten (1), (2) und (3) bei Temperaturen oberhalb der höchsten Schmelz- oder Glastemperatur des oder der thermoplastischen Polymer(e) mischt.

In einer **ersten bevorzugten Variante** des erfindungsgemäßen Verfahrens werden Komponente (1) und (2) vorgelegt und bei Temperaturen oberhalb der höchsten Schmelz- oder Glastemperatur des oder der thermoplastischen Polymer(e) innig vermischt und die Komponente (3) anschließend unter Fortsetzung des Mischens und unter Beibehalt der vorgenannten Mischungstemperatur hinzugefügt.

In einer **zweiten bevorzugten Variante** des erfindungsgemäßen Verfahrens wird Komponente (2) vorgelegt und auf eine Temperatur bis knapp unterhalb der Schmelz- oder Glastemperatur von Komponente (1) gemischt. Anschließend wird Komponente (1) zugegeben, die Temperatur auf eine Temperatur größer der höchsten Schmelz- oder Glastemperatur von Komponente (1) erhöht und erst nachdem die Komponenten (2) und (1) innig vermischt sind, die Komponente (3) abschließend unter Fortsetzung des Mischens und unter Beibehalt der Mischungstemperatur oberhalb der höchsten Schmelz- oder Glasttemperatur des oder der thermoplastischen Polymere hinzugefügt.

In einer **dritten bevorzugten Variante** wird Komponente (1) vorgelegt und auf eine Temperatur oberhalb der höchsten Schmelz- oder Glastemperatur von Komponente (1) erhitzt, dann wird Komponente (2) hinzugefügt und Komponente (1) und (2) werden innig vermischt. Im Anschluß wird Komponente (3) unter Fortsetzung des Mischens und unter Beibehalt der Mischungstemperatur oberhalb der höchsten Schmelz- oder Glastemperatur des oder der thermoplastischen Polymere hinzugefügt.

In einer **vierten bevorzugten Variante** des Verfahrens können alle 3 Komponenten gleichzeitig bei einer Temperatur oberhalb der höchsten Schmelz- oder Glastemperatur des oder der thermoplastischen Polymere vorgelegt und anschließend innig gemischt werden.

Die Mischung der Komponenten (1), (2) und (3) kann unter Verwendung von in der Kautschuktechnologie bekannten Mischsystemen wie Innenmischern mit ineinandergreifender oder tangierender Rotorgeometrie sowie auch in kontinuierlich mischenden Aggregaten wie Mischextrudern mit 2-4 Wellenschnecken erfolgen.

Bei der Durchführung des erfindungsgemäßen Verfahrens ist es wichtig darauf zu achten, dass die Mischungstemperatur so hoch ist, dass die thermoplastische Komponente (1) unbeschadet in den plastischen Zustand überführt wird. Dies wird gewährleistet, wenn eine Temperatur oberhalb der höchsten Schmelz- oder Glastemperatur des oder der thermoplastischen Polymere gewählt wird. Besonders bewährt hat es sich, die Mischung der Komponenten (1) bis (3) bei einer Temperatur im Bereich von 200°C bis 250°C vorzunehmen.

Ferner sollten die Mischbedingungen so gewählt sein, dass Komponente (1) und (2) vor der Vernetzung der Elastomerphase eine möglichst feine Verteilung der Mischungsbestandteile erfahren. Typisch ist eine Teilchengröße der Thermoplastteilchen vor der Vernetzung von kleiner 5 Micrometer, wobei die Thermoplastphase als Dispersion in der Elastomermatrix vorliegt bzw. eine co-kontinuierliche Phasenverteilung vorliegt.

Die Zugabezeit, Temperatur und Form und Menge des Vernetzungssystems sollte darüberhinaus so gewählt sein, dass eine gute Verteilung des Vernetzers in der Elastomerphase gewährleistet ist, die Elastomer- und Thermoplastphase im oben beschriebenen Zustand vorliegen und erst dann die quantitative Vernetzung der Elastomerphase erfolgt, so dass eine Phasenumkehr zu einer co-kontinuierlichen Phasenstruktur der Elastomeren und Thermoplastphase erfolgt bzw. die Elastomerphase in der Thermoplastphase mit Teilchen < 5 µm dispergiert vorliegt.

Die erfindungsgemäßen vernetzbaren Zusammensetzungen eignen sich überraschenderweise hervorragend zur Bereitstellung thermoplastischer Elastomere.

Gegenstand der Erfindung ist daher auch ein Verfahren zur Herstellung eines thermoplastischen Elastomers auf der Basis von einem oder mehreren thermoplastischen Polymeren und einem oder mehreren Carboxyl-Gruppen haltigen Elastomeren, indem man die erfindungsgemäße vernetzbare Zusammensetzung der zuvor genannten Art einem fortgesetzten Mischungsvorgang bei einer Temperatur unterwirft, welche oberhalb des höchsten Schmelzpunktes oder Glaspunktes der oder der eingesetzten thermoplastischen Polymere (1) liegt.

Beim Mischvorgang der drei Komponenten (1), (2) und (3) zwecks Herstellung der erfindungsgemäßen vernetzbaren Zusammensetzung wird ein Verfahrenspunkt erreicht, in dem die Leistungsaufnahme im Mischaggregat einen konstanten Wert annimmt. Der Mischvorgang zur Herstellung der vernetzbaren Zusammensetzung ist damit abgeschlossen, die vernetzbare Zusammensetzung liegt vor. Bei Bedarf kann der Mischvorgang an dieser Stelle beendet werden und die vernetzbare Zusammensetzung durch Abschrecken, d.h. Absenken der Temperatur, erhalten und sofern gewünscht auch isoliert werden. Bei einer Fortsetzung des Mischvorgangs, ob unmittelbar oder nach Unterbrechung wie beschrieben, findet die ionische Vernetzung des/der Elastomere durch das Vernetzungssystem (3) statt, die dadurch zu erkennen ist, dass eine Steigerung der Leistungsaufnahme des Mischaggregats erfolgt. Es handelt sich hierbei um eine dynamische, aber reversible Vernetzung des/der Elastomere.

Nach erfolgter Phasenumkehr wird das erhaltene vernetzte Produkt, d.h. das thermoplastische Elastomer schnell auf eine Temperatur unterhalb der Schmelz- oder Glastemperatur des oder der thermoplastischen Polymere abgekühlt.

Nach dem Zusatz und der Verteilung der speziellen Salze (3) in der Elastomerphase erhöht sich die Viskosität der Elastomerphase, und es kommt eine TPV typische Phasenverteilung von Thermoplast- und Elastomerphase zustande.

Gegenstand der Erfindung sind ferner die **thermoplastischen Elastomere** auf der Basis von einem oder mehreren Thermoplasten und einem oder mehreren Carboxyl-Gruppen-haltigen Elastomeren, wobei das/die Elastomere durch ein Vernetzungssystem, bei dem es um ein oder mehrere Salze der allgemeinen Formel (I)

(R^{y-})_{x/y}M^{x+} (I)

handelt, worin
- R^{y-}: einen C₁-C₂₆ Kohlenwasserstoff-Rest darstellt, der y Carboxylgruppen enthält
- y: die Werte 1, 2, 3, oder 4 darstellen kann,
- x: 3 oder 4 ist und
- M: ein drei- oder vierwertiges Metall ist
vernetzt ist.

Bei allen einzusetzenden thermoplastischen Polymeren, Elastomeren und sonstigen Füllstoffen handelt es sich um unbedenkliche Substanzen, und es werden nicht-toxische, geruchsarme und farblose thermoplastische Elastomere erhalten.

Die erfindungsgemäßen thermoplastischen Elastomere zeichnen sich dadurch aus, dass sie eine Thermoplastphase sowie eine Elastomerphase aufweisen, wobei die Elastomeren, wie beschrieben, untereinander vernetzt sind. Sie besitzen unerwarteterweise hervorragende Hochtemperatureigenschaften. Sie verfügen auch noch bei hohen Temperaturen von deutlich mehr als 150 °C (d.h. auch in Temperaturbereichen, wo nach bisherigem Stand der Technik die ionische Bindung schon erweicht) die v.a. im Automobilbau gefordert werden, über exzellente physikalische und dynamische Eigenschaften wie zum Beispiel einen hohen Modulus 100, hohe Bruchdehnung und Bruchspannung. Erst nach Aufschmelzen der Thermoplastphase wird das gesamte System thermoplastisch verarbeitbar und erfüllt damit die notwendigen Voraussetzungen für ein thermoplastisches Elastomer, allerdings ohne auf eine irreversible Vernetzung der Elastomerphase wie bei den thermoplastischen Vulkanisaten zurückgreifen zu müssen.

**Gegenstand der Erfindung** ist somit die Verwendung der thermoplastischen Elastomere zur Herstellung von Formteilen, bevorzugt Riemen, Dichtungen, Manschetten, Schläuchen, Membranen, Dämpfern, Profilen oder zur Kunstoff-Kautschuk-Coextrusion, oder zum Co-Formteil-Spritzen.

Die erhaltenen Formteile zeichnen sich durch herausragende physikalische Eigenschaften, Hochtemperaturbeständigkeit und Ölbeständigkeit aus, wie sie für Schläuche, Riemen, Membranen, Dichtungen, Bälge für beispielsweise Automobil- und Industrieanwendungen von großer Bedeutung sind. Die Formteile können auf einfache Weise in einem Einstufenprozess hergestellt werden und zeichnen sich durch hervorragende toxikologischen Eigenschaften aus.

### Beispiele:

### Eingesetzte Materialien:

1. **Therban^{®} XT VP KA 8889:** carboxylierter hydrierter Nitrilkautschuk der Fa. Lanxess Deutschland GmbH
   ACN-Gehalt: 33 Gew.%, Mooney Viskosität (ML 1+4, 100°C): 77, Restdoppelbindungsgehalt: 3,5%
2. **Aluminiumstearat:** (Riedel De Haën), analytische Qualität
3. **Krynac^{®} X 7.50:** carboxylgruppenhaltiger Nitrilkautschuk der Fa. Lanxess Deutschland GmbH
   ACN-Gehalt 27 Gew.%, Mooney Viskosität (ML 1+4, 100°C): 47
4. **Durethan^{®} B40:** Polyamid der Firma Lanxess Deutschland GmbH PA 6, Spritzguss Typ, nicht verstärkt, hochviskos, schlagzäh für hochbelastete Teile
5. **Vulkasil^{®} A1:** gefällte Kieselsäure der Firma Lanxess Deutschland GmbH pH 10-12, Oberfläche 60 m2 / g, Pulver
6. **Pretiox^{®} AV-3:** Titandioxid der Firma PRECHEZA a.s. unbeschichtet
7. **Vulkanox^{®} SKF:** Stabilisator, sterisch gehindertes mehrkerniges Phenol der Firma Lanxess Deutschland GmbH,
8. **Vulkanox^{®} BHT:** Stabilisator der Firma Lanxess Deutschland GmbH, di-butyl-p-Kresol
9. **Therban^{®} A 3407:** hydrierter Nitrilkautschuk der Fa. Lanxess Deutschland GmbH ACN-Gehalt: 34%, Mooney Viskosität ML 1+4,100°C: 70,
   Restdoppelbindungsgehalt: <0,9%
10. **Naugard^{®} 445:** Stabilisator der Firma Crompton-Uniroyal Chemical 4,4'-Bis(alpha, alpha-dimethylbenzyl)diphenylamin
11. **Irganox^{®} 1035:** Stabilisator der Firma Ciba Spezialitätenchemie sterisch gehindertes Phenol
12. **Trigonox^{®} A80:** Peroxid der Firma Akzo Nobel, tert-Butylhydroperoxid 80% in Wasser

Alle Mengenangaben in den nachfolgenden Tabellen in phr (parts per hundred rubber). Die Elastomerkomponente entspricht 100 phr.

Als primäres Mischaggregat wurde eine 1,51 l Werner und Pfleiderer Innenmischer Typ E/3 mit PES5 Mischgeometrie eingesetzt. In einer typischen Mischungsweise wurde Thermoplast (Durethan^{®}B40) und Elastomer (Therban^{®}XT KA8889 oder Krynac^{®}X7.50 oder Therban^{®}A 3407) zusammen mit den Füllstoffen, Weichmachern und Stabilisatoren in dem auf 200°C vorgeheizten Innenmischer vorgelegt. Der Füllgrad des Innenmischers beträgt ca. 75%.

Durch Mischen bei 20-60 Umdrehungen/Minute wurden über den Eintrag von Scherenergie über einen Zeitraum von ca. 2 min die zusätzlichen Füllstoffe zuerst in der Elastomerphase dispergiert, anschließend nach Erreichen der Schmelz- oder Glastemperatur des Thermoplasten die Elastomer- und Thermoplastphase bei bis zu 100 Umdrehungen/Minute ineinander dispergiert. Die Drehzahl wurde dabei so gesteuert, dass die Mischungstemperatur 250°C nicht überschritt. Nach ca. 5 min wurde durch Herunterfahren der Drehzahl auf ca. 30 Umdrehungen/Minute die Temperatur auf ca. 230°C gesenkt und das Vernetzungsmittel zugegeben.

Während die Drehzahl auf 30 Umdrehungen/Minute für ca. 2 min belassen wurde, war ein Temperaturanstieg sowie ein Anstieg der Leistungsaufnahme im Mischer zu beobachten, der die Vernetzung der Elastomerphase anzeigt. Die Mischung wurde nun bei der maximalen Drehzahl von 100 Umdrehungen pro Minute für ca. 3 min weitergemischt, so dass die Temperatur 250°C nicht überschritt. Die Gesamtmischzeit betrug etwa 12 min.

Nach Beendigung der Mischung wurde die Mischung ausgeworfen und auf einem auf 40°C gekühlten Walzwerk der Firma Troester vom Typ WNU3 mit 200mm Durchmesser Walzen abgekühlt und zu Krümeln bzw. einem Pulver zerschert.

Dieses Pulver wurde in einer elektrischen Presse der Firma Schwabenthan vom Typ Polystat 400P bei 200bar Betriebsdruck für 20min bei 230°C in eine geeignete Form überführt, aus der Prüfkörper gestanzt wurden.

Alle Vergleichsbeispiele sind in der nachfolgenden Tabelle 1 mit einem * gekennzeichnet.

**Tabelle 1: Mischungszusammensetzung**

| **Beispiel:** | | **1** | **2*** | **3*** | **4** | **5** | **6** | **7** | **8*** |
|---|---|---|---|---|---|---|---|---|---|
| Therban^{®} XT8889 | | 100 | 100 | - | 100 | 100 | 100 | - | - |
| Krynac^{®} X750 | | - | - | - | - | - | - | 100 | 100 |
| Therban^{®} A 3407 | | - | - | 100 | - | - | - | - | |
| Durethan^{®} B40 | | 67 | 67 | 67 | 100 | 42,9 | 53,8 | 60 | 60 |
| Titandioxid Anatas Pretiox AV - 03 | | - | - | - | - | - | - | 5 | 5 |
| Vulkanox^{®} SKF | | - | - | - | - | - | - | 2 | 2 |
| Vulkanox^{®} BHT | | - | - | - | - | - | - | 1,5 | 1,5 |
| Naugard^{®} 445 | | 2,5 | 2,5 | 2,5 | - | - | - | - | - |
| Irganox^{®} 1035 | | 1 | 1 | 1 | - | - | - | - | - |
| Trigonox^{®} A80 | | - | 3,5 | 3,5 | - | - | - | - | - |
| Aluminiumtristearat | | 13,3 | - | - | 20 | 14,3 | 30,8 | 10 | - |

**Tabelle 2. Vulkanisationsbedingungen und Produkteigenschaften**

| **Beispiel** | | **1** | **2*** | **3*** | **4** | **5** | **6** | **7** | **8*** |
|---|---|---|---|---|---|---|---|---|---|
| Vulkanisation : | erfolgt in einer Presse | | | | | | | | |
| Temp [°C] | 250 | | | | | | | | |
| Zeit [min] | 20 | | | | | | | | |
| Zugversuch nach DIN 53504 | | | | | | | | | |
| F | MPa | 14,5 | 9,1 | 3,9 | 32,3 | 19,2 | 15,6 | 19 | 13,1 |
| D | % | 157 | 399 | 341 | 307 | 281 | 163 | 252 | 299 |
| S25 | MPa | 5,4 | 1,3 | 2,1 | 15,1 | 3,9 | 6,2 | 5,9 | 2,5 |
| S50 | MPa | 8,7 | 1,6 | 2,5 | 19,7 | 7,2 | 9,7 | 8,7 | 3,5 |
| S75 | MPa | 10,6 | 1,9 | 2,8 | 22,4 | 9,8 | 12 | 10,7 | 4,6 |
| S100 | MPa | 12 | 2,3 | 3 | 24,1 | 12 | 13,8 | 12,4 | 5,7 |
| S150 | MPa | 14 | 3,3 | 3,5 | 26,5 | 15 | 15,7 | 15 | 7,9 |
| S200 | MPa | | 4,6 | 3,7 | 28,4 | 17,2 | 17,6 | 17,1 | 10 |
| S250 | MPa | | 6,1 | 3,8 | 30,2 | 18,8 | | 19 | 11,9 |
| S300 | MPa | | 7,4 | 3,9 | 32,1 | 21,2 | | | 13 |
| S350 | MPa | | 8,5 | 3,8 | | | | | |

Aus den Versuchsergebnissen können folgende Vorteile der erfindungsgemäßen Zusammensetzung abgelesen werden:

Im Vergleich mit einem klassisch peroxidisch vernetzten Produkt (Beispiel 2*) zeigen die mit Aluminiumstearat vernetzten Produkte durchweg höhere Zugfestigkeiten unter Behalt von Bruchdehnungen von bis zu 300%. Dieses Verhalten wird begünstigt durch die Wechselwirkung der Carbonylfunktionen in den Polymeren mit der Polyamid-Matrix sowie durch die Stärke der ionischen Vernetzung. Besonders deutlich kommt dies zum Ausdruck beim Vergleich mit Mischung auf Basis von HNBR welches keine Carboxylfunktion aufweist (Therban^{®} A 3407) (Beispiel 3*). Ein analoges Verhalten wird bei der Verwendung von XNBR (Krynac^{®} X 750) in der erfindungsgemäßer Zusammensetzung gemäß Beispiel 7 beobachtet. Wird das ionische Vernetzersystem weggelassen, so werden deutlich geringere Festigkeiten erreicht (siehe Zusammensetzung gemäß Beispiel 8*).

### Vergleich des Beispiels 1 mit einem käuflich erhältlichen thermoplastischen Elastomer (Zeotherm^{™} 100-80B)

In "ANTEC Spring Meeting 2004" wurde unter dem Titel "150°C Heat- and Oil-Resistant TPV- Long-Term Fluid and Spike Temperature Comparison" (Autoren: Jeffrey E. Dickerhoof, Brian J. Cail, Samuel C. Harber) folgende Tabelle 1 veröffentlicht:

| | **(a)** | **(b)** | **(c)** | **(d)** |
|---|---|---|---|---|
| | **ACM/PA** | **COPE** | **Si-TPV** | **AEM** |
| **Tensile [MPa]** | **9,30** | **14.20** | **7,50** | **19,10** |
| **Elongation (%)** | **200** | **650** | **563** | **372** |
| **Hardness** | **84A** | **81A** | **62A** | **64A** |
| **Specific gravity** | **1,15** | **1,02** | **1,20** | **1,35** |

| | | | | |
|---|---|---|---|---|
| wobei: a. Zeotherm^{™} 100-80B: A TPV based on polyacrylate (ACM) rubber and polyamide. Designated as "ACM//PA" (Zeon Chemicals L.P.) b. Hytrel 3078, A Low-durometer copolyester resin. Designated as "COPE" (E.I. DuPont). c. TPSiV 3040-65A, A low-durometer proprietary copolyester resin // silicone elastomer TPV. Designated as "Si-TPV" (Dow Corning/Multibase). d Vamac AEM, an ethylene-acrylic thermoset elastomer compound. Designated AEM (E.I. DuPont) | | | | |

### Dynamisch mechanische Eigenschaftsveränderungen in Abhängigkeit von der Temperatur:

Nachfolgend wurde die Veränderung der dynamisch mechanischen Eigenschaften in Abhängigkeit von der Temperatur für eine Probe des oben genannten Materials (a) ACM//PA (schwarze Kurve) und für das erfindungsgemäße Beispiel 1 bestimmt.

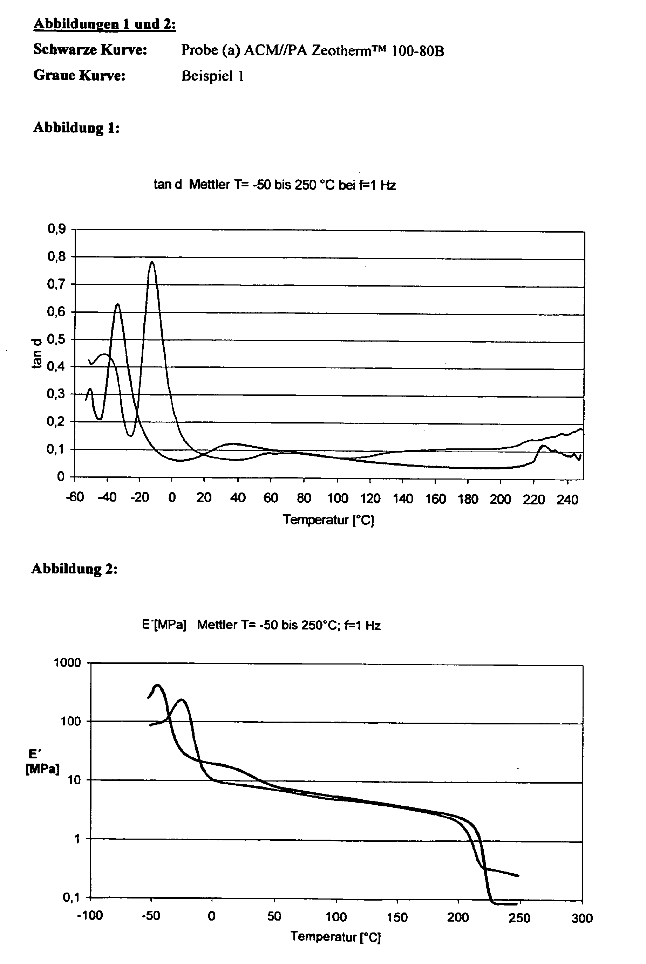

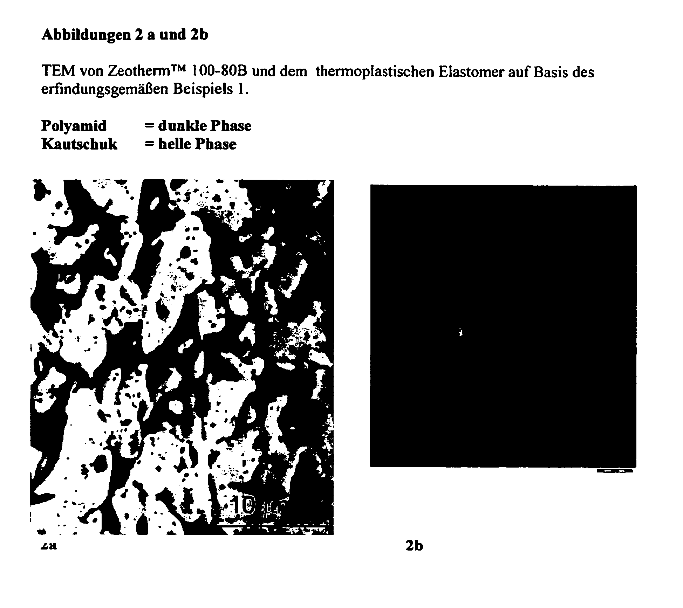

In den Abbildungen 1 und 2 wurden die entsprechenden Eigenschaftsveränderungen für beide Proben miteinander verglichen.

Ein Vergleich mit dem kommerziellen Produkt Zeotherm^{™} 100-80B, welches Ölfestigkeit reklamiert, zeigt die Überlegenheit der erfindungsgemäßen Systeme bezüglich der Festigkeit. Ein direkter Vergleich des dynamisch mechanischen Verhaltens mit Zeotherm^{™} 100-80B auf der Basis von ACM Kautschuk und Polyamid hergestellt allerdings mit einem abweichenden Vernetzungssystem, zeigt die Gleichwertigkeit in der Temperaturbeständigkeit der Eigenschaften auf (Speichermodul E' und tan δ), wobei die erwähnten Vorteile bezüglich der Festigkeit bestehen. Diese Vorteile können unter anderem auf die überlegene Phasenverteilung mit Hinblick auf die Teilchengrößen bei dem erfindungsgemäßen System zurückgeführt werden, wie die TEM Aufnahmen des ACM//PA Systems (Zeotherm^{™} 100-80B) in Abbildung 2a im Vergleich zum erfindungsgemäßen Beispiel 1 in Abbildung 2b deutlich machen.

Die Güte der Phasenverteilung insbesondere der Teilchengrößen ist dabei bekanntermaßen ein wesentliches Qualitätskriterium für die Eigenschaften von TPV Produkten.

## Patentansprüche

1. Vernetzbare Zusammensetzungen enthaltend
(1) ein oder mehrere thermoplastische Polymere
(2) ein oder mehrere Elastomere, die Carboxyl-Gruppen aufweisen, sowie
(3) als Vernetzungssystem ein oder mehrere Salze der allgemeinen Formel (I)
(R^{y-})_{x/y}M^{x+} (I)
worin
R^{y-} einen C₁-C₂₆ Kohlenwasserstoff-Rest darstellt, der y Carboxylgruppen enthält
y die Werte 1, 2, 3, oder 4 darstellen kann,
x 3 oder 4 ist und
M ein drei- oder vierwertiges Metall ist,
wobei als thermoplastische Polymere Polyamide mit einer Schmelztemperatur oder Glastemperatur >90°C eingesetzt werden.

2. Vernetzbare Zusammensetzungen gemäß Anspruch 1 enthaltend
| | | |
|---|---|---|
| (1) | 10 - 90 Gew.% | eines oder mehrerer thermoplastischer Polymere |
| (2) | 89 - 9 Gew.% | eines oder mehrerer Elastomere, die Carboxyl-Gruppen aufweisen, und |
| (3) | 1 - 40 Gew.% | eines Vernetzungssystems, bei dem es sich um ein oder mehrere Salze der allgemeinen Formel (I) handelt, |
(R^{y-})_{x/y}M^{x+} (I)
worin
R^{y-} einen C₁-C₂₆ Kohlenwasserstoff-Rest darstellt, der y Carboxylgruppen enthält
y die Werte 1, 2, 3, oder 4 darstellen kann,
x 3 oder 4 ist und
M ein drei- oder vierwertiges Metall ist.
wobei die Summe der drei Komponenten (1), (2) und (3) 100 Gew.% ergibt.

3. Vernetzbare Zusammensetzungen gemäß Anspruch 1 enthaltend:
| | | |
|---|---|---|
| (1) | 15 - 80 Gew.% | eines oder mehrerer thermoplastischer Polymere |
| (2) | 83 - 18 Gew.% | eines oder mehrerer Elastomere, die Carboxyl-Gruppen aufweisen, und |
| (3) | 2 - 30 Gew.% | eines Vernetzungssystems, bei dem es sich um ein oder mehrere Salze der allgemeinen Formel (I) handelt, |
(R^{y-})_{x/y}M^{x+} (I)
worin
R^{y-} einen C₁-C₂₆ Kohlenwasserstoff-Rest darstellt, der y Carboxylgruppen enthält
y die Werte 1, 2, 3, oder 4 darstellen kann,
x 3 oder 4 ist und
M ein drei- oder vierwertiges Metall ist.
wobei die Summe der drei Komponenten (1), (2) und (3) 100 Gew.% ergibt.

4. Vernetzbare Zusammensetzungen gemäß einem oder mehreren der Ansprüche 1-3, worin M für B, Al, Sc, Yt, Fe, Sn, Pb, Ti, oder Hf steht.

5. Vernetzbare Zusammensetzungen gemäß einem oder mehreren der Ansprüche 1-4, wobei der C₁-C₂₆-Kohlenwasserstoff-Rest (R^{y-}) geradekettig oder verzweigt, gesättigt oder auch ein- oder mehrfach ungesättigt, acyclisch oder cyclisch, aliphatisch oder aromatisch ist.

6. Vernetzbare Zusammensetzungen gemäß einem oder mehreren der Ansprüche 1-5, worin R^{y-} Formiat, Acetat, Acrylat, Methacrylat, Propionat, Lactat, Crotonat, Pivalat, Capronat, Sorbinat, Caprylat, Oleat, Caprinat, Laurinat, Linolat, Palminat, Stearat, Resinat, Hexacosanat, Icopentanat, Eicosapentanat, Oxalat, Malonat, Maleinat, Fumarat, Succinat, Glutarat, Adipat, Salicylat, Pimelinat, Terephthalat, Isophathalat, Citronat oder Pyromellitat bedeutet.

7. Vernetzbare Zusammensetzung gemäß einem oder mehreren der Ansprüche 1-6, wobei die Zusammensetzung als Vernetzungssystem ausschließlich das Vernetzungssystem (3) enthält.

8. Vernetzbare Zusammensetzungen gemäß einem oder mehreren der Ansprüche 1-7, wobei als thermoplastische Polymere (1) Polyamide mit einer Schmelztemperatur oder Glastemperatur > 120°C eingesetzt werden.

9. Vernetzbare Zusammensetzungen gemäß einem oder mehreren der Ansprüche 1-8, wobei das Elastomer (2) 0,5-15 Gew %, bezogen auf 100 Gew.% Elastomer (2), gebundener Carboxyl-Gruppen enthält, bevorzugt 0,5 - 10 Gew.%, besonders bevorzugt 1-7 Gew.% und insbesondere 2-5 Gew.% gebundener Carboxyl-Gruppen, bezogen auf 100 Gew.% Elastomer (2).

10. Vernetzbare Zusammensetzungen gemäß einem oder mehreren der Ansprüche 1-9, wobei als Elastomer (2) carboxylierter Nitrilkautschuk (XNBR), hydrierter, carboxylierter Nitrilkautschuk (HXNBR), Maleinsäureanhydrid ("MAH") gepfropfte Kautschuke auf Basis von EPM, EPDM, HNBR, EVA, EVM, SBR, NR oder BR, Carboxylierter Styrol-Butadienkautschuk (XSBR), AEM mit freien Carboxylgruppen, ACM mit freien Carboxylgruppen oder beliebige Mischungen dieser Elastomere eingesetzt werden.

11. Vernetzbare Zusammensetzungen gemäß einem oder mehreren der Ansprüche 1-10, wobei als Komponente (1) ein Polyamid und als Komponente (2) HXNBR oder XNBR eingesetzt wird.

12. Verfahren zur Herstellung der vernetzbaren Zusammensetzungen gemäß einem oder mehreren der Ansprüche 1-11, indem man alle Komponenten (1), (2) und (3) bei Temperaturen oberhalb der höchsten Schmelz- oder Glastemperatur des oder der thermoplastischen Polymer(e) mischt.

13. Verfahren zur Herstellung eines thermoplastischen Elastomers auf der Basis von einem oder mehreren thermoplastischen Polymeren (1) und einem oder mehreren Carboxyl-Gruppen haltigen Elastomeren (2), indem man die vernetzbare Zusammensetzung gemäß einem oder mehreren der Ansprüche 1-11 einem fortgesetzten Mischungsvorgang bei einer Temperatur unterwirft, welche oberhalb des höchsten Schmelzpunktes oder Glaspunktes des oder der eingesetzten thermoplastischen Polymere (1) liegt.

14. Thermoplastische Elastomere auf der Basis von einem oder mehreren Thermoplasten (1) und einem oder mehreren Carboxyl-Gruppen-haltigen Elastomeren (2), wobei das/die Carboxyl-Gruppen-haltigen Elastomere (2) durch ein Vernetzungssystem, bei dem es sich um eine oder mehrere Salze der allgemeinen Formel (I) handelt,
(R^{y-})_{x/y} M^{x+} (I)
worin
R^{y-} einen C₁-C₂₆ Kohlenwasserstoff-Rest darstellt, der y Carboxylgruppen enthält
y die Werte 1, 2, 3, oder 4 darstellen kann,
x x 3 oder 4 ist und
M ein drei- oder vierwertiges Metall ist
vernetzt ist bzw. sind,
wobei als Thermoplasten Polyamide mit einer Schmelztemperatur oder Glastemperatur > 90°C eingesetzt werden.

15. Verwendung der thermoplastischen Elastomere gemäß Anspruch 14 zur Herstellung von Formteilen, bevorzugt Riemen, Dichtungen, Manschetten, Schläuchen, Membranen, Dämpfern, Profilen oder zur Kunststoff-Kautschuk-Coextrusion, oder zum Co-Formteil-Spritzen.

16. Formteile erhältlich gemäß Anspruch 15.

## Claims

1. Crosslinkable compositions comprising
(1) one or more thermoplastic polymers
(2) one or more elastomers which have carboxy groups, and also
(3) as crosslinking system, one or more salts of the general formula (I)
(R^{y-})_{x/y}M^{x+} (I)
in which
R^{y-} is a C₁-C₂₆ hydrocarbon radical which has y carboxy groups,
y can be the values 1, 2, 3 or 4,
x is 3 or 4 and
M is a tri- or tetravalent metal,
where the thermoplastic polymers used comprise polyamides whose melting point or glass transition temperature is > 90°C.

2. Crosslinkable compositions according to Claim 1 comprising
(1) from 10 to 90% by weight of one or more thermoplastic polymers
(2) from 89 to 9% by weight of one or more elastomers which have carboxy groups, and
(3) from 1 to 40% by weight of a crosslinking system which involves one or more salts of the general formula (I)
(R^{y-})_{x/y}M^{x+} (I)
in which
R^{y-} is a C₁-C₂₆ hydrocarbon radical which has y carboxy groups,
y can be the values 1, 2, 3 or 4,
x is 3 or 4 and
M is a tri- or tetravalent metal,
where the entirety of the three components (1), (2) and (3) gives 100% by weight.

3. Crosslinkable compositions according to Claim 1 comprising
(1) from 15 to 80% by weight of one or more thermoplastic polymers
(2) from 83 to 18% by weight of one or more elastomers which have carboxy groups, and
(3) from 2 to 30% by weight of a crosslinking system which involves one or more salts of the general formula (I)
(R^{y-})_{x/y}M^{x+} (I)
in which
R^{y-} is a C₁-C₂₆ hydrocarbon radical which has y carboxy groups,
y can be the values 1, 2, 3 or 4,
x is 3 or 4 and
M is a tri- or tetravalent metal,
where the entirety of the three components (1), (2) and (3) gives 100% by weight.

4. Crosslinkable compositions according to one or more of Claims 1 to 3, where M is B, Al, Sc, Yt, Fe, Sn, Pb, Ti, or Hf.

5. Crosslinkable compositions according to one or more of Claims 1 to 4, where the C₁-C₂₆ hydrocarbon radical (R^{y-}) is straight-chain or branched, saturated or else mono- or polyunsaturated, acyclic or cyclic, aliphatic or aromatic.

6. Crosslinkable compositions according to one or more of Claims 1 to 5, in which R^{y-} is formate, acetate, acrylate, methacrylate, propionate, lactate, crotonate, pivalate, capronate, sorbate, caprylate, oleate, caprate, laurate, linolate, palmate, stearate, resinate, hexacosanate, icopentanate, eicosapentanate, oxalate, malonate, maleate, fumarate, succinate, glutarate, adipate, salicylate, pimelate, terephthalate, isophthalate, citrate or pyromellitate.

7. Crosslinkable composition according to one or more of Claims 1 to 6, where the composition comprises, as crosslinking system, exclusively the crosslinking system (3).

8. Crosslinkable compositions according to one or more of Claims 1 to 7, where the thermoplastic polymers (1) used comprise polyamides whose melting point or glass transition temperature is > 120°C.

9. Crosslinkable compositions according to one or more of Claims 1 to 8, where the elastomer (2) contains from 0.5 to 15% by weight, based on 100% by weight of elastomer (2), of carboxy groups, preferably from 0.5 to 10% by weight, particularly preferably from 1 to 7% by weight and in particular from 2 to 5% by weight of carboxy groups, based on 100% by weight of elastomer (2).

10. Crosslinkable compositions according to one or more of Claims 1 to 9, where, as elastomer (2), carboxylated nitrile rubber (XNBR), hydrogenated, carboxylated nitrile rubber (HXNBR), maleic-anhydride-("MAH")-grafted rubbers based on EPM, EPDM, HNBR, EVA, EVM, SBR, NR or BR or carboxylated styrenebutadiene rubber (XSBR), AEM having free carboxy groups, ACM having free carboxy groups or any desired mixture of these elastomers is used.

11. Crosslinkable compositions according to one or more of Claims 1 to 10, where, as component (1), a polyamide is used and, as component (2), XNBR or XNBR is used.

12. Process for preparation of the crosslinkable compositions according to one or more of Claims 1 to 11, by mixing all of the components (1), (2) and (3) at temperatures above the highest melting point or glass transition temperature of the thermoplastic polymer(s).

13. Process for preparation of a thermoplastic elastomer based on one or more thermoplastic polymers (1) and on one or more elastomers (2) containing carboxy groups, by subjecting the crosslinkable composition according to one or more of Claims 1 to 11 to a continued mixing procedure at a temperature which is above the highest melting point or glass transition temperature of the thermoplastic polymer(s) (1) used.

14. Thermoplastic elastomers based on one or more thermoplastics (1) and on one or more elastomers (2) containing carboxy groups, where the elastomer(s) (2) containing carboxy groups has/have been crosslinked via a crosslinking system which involves one or more salts of the general formula (I),
(R^{y-})_{x/y}M^{x+} (I)
in which
R^{y-} is a C₁-C₂₆ hydrocarbon radical which has y carboxy groups,
y can be the values 1, 2, 3 or 4,
x is 3 or 4 and
M is a tri- or tetravalent metal,
where the thermoplastics used comprise polyamides whose melting point or glass transition temperature is > 90°C.

15. Use of the thermoplastic elastomers according to Claim 14 for production of mouldings, preferably of drive belts, of gaskets, of sleeves, of hoses, of membranes, of dampers, of profiles, or for plastics-rubber coextrusion, or for co-injection of mouldings.

16. Mouldings obtainable according to Claim 15.

## Revendications

1. Compositions réticulables, contenant
(1) un ou plusieurs polymères thermoplastiques
(2) un ou plusieurs élastomères, qui comportent des groupes carboxyles, et
(3) en tant que système de réticulation, un ou plusieurs sels de formule générale (I)
(R^{y-})_{x/y}M^{x+} (I)
dans laquelle
R^{y-} représente un radical hydrocarboné en C₁ à C₂₆ qui contient y groupes carboxyles,
y peut représenter les valeurs 1, 2, 3 ou 4,
x représente 3 ou 4 et
M représente un métal tri- ou tétravalent,
des polyamides ayant une température de fusion ou une température de transition vitreuse supérieure à 90 °C étant utilisés en tant que polymères thermoplastiques.

2. Compositions réticulables selon la revendication 1, contenant
(1) 10 à 90 % en poids d'un ou de plusieurs polymères thermoplastiques
(2) 89 à 9 % en poids d'un ou de plusieurs élastomères qui comportent des groupes carboxyles et
(3) 1 à 40 % en poids d'un système de réticulation consistant en un ou plusieurs sels de formule générale (I)
(R^{y-})_{x/y}M^{x+} (I)
dans laquelle
R^{y-} représente un radical hydrocarboné en C₁ à C₂₆ qui contient y groupes carboxyles,
y peut représenter les valeurs 1, 2, 3 ou 4,
x représente 3 ou 4 et
M représente un métal tri- ou tétravalent,
la somme des trois composants (1), (2) et (3) atteignant 100 % en poids.

3. Compositions réticulables selon la revendication 1, contenant
(1) 15 à 80 % en poids d'un ou de plusieurs polymères thermoplastiques
(2) 83 à 18 % en poids d'un ou de plusieurs élastomères qui comportent des groupes carboxyles et
(3) 2 à 30 % en poids d'un système de réticulation consistant en un ou plusieurs sels de formule générale (I)
(R^{y-})_{x/y}M^{x+} (I)
dans laquelle
R^{y-} représente un radical hydrocarboné en C₁ à C₂₆ qui contient y groupes carboxyles,
y peut représenter les valeurs 1, 2, 3 ou 4,
x représente 3 ou 4 et
M représente un métal tri- ou tétravalent,
la somme des trois composants (1), (2) et (3) atteignant 100 % en poids.

4. Compositions réticulables selon une ou plusieurs des revendications 1 à 3, dans lesquelles M représente B, Al, Sc, Yt, Fe, Sn, Pb, Ti ou Hf.

5. Compositions réticulables selon une ou plusieurs des revendications 1 à 4, dans lesquelles le radical hydrocarboné en C₁ à C₂₆ (R^{y-}) est linéaire ou ramifié, saturé ou mono- ou polyinsaturé, acyclique ou cyclique, aliphatique ou aromatique.

6. Compositions réticulables selon une ou plusieurs des revendications 1 à 5, dans lesquelles R^{y-} signifie formiate, acétate, acrylate, méthacrylate, propionate, lactate, crotonate, pivalate, capronate, sorbinate, caprylate, oléate, caprinate, laurinate, linolate, palminate, stéarate, résinate, hexacosanate, icopentanate, eicosapentanate, oxalate, malonate, maléinate, fumarate, succinate, glutarate, adipate, salicylate, pimélinate, téréphtalate, isophtalate, citronate ou pyroméllitate.

7. Composition réticulable selon une ou plusieurs des revendications 1 à 6, dans laquelle la composition contient exclusivement le système de réticulation (3) en tant que système de réticulation.

8. Compositions réticulables selon une ou plusieurs des revendications 1 à 7, dans lesquelles des polyamides ayant une température de fusion ou une température de transition vitreuse supérieure à 120 °C sont utilisés en tant que polymères thermoplastiques (1).

9. Compositions réticulables selon une ou plusieurs des revendications 1 à 8, dans lesquelles l'élastomère (2) contient 0,5 à 15 % en poids, par rapport à 100 % en poids de l'élastomère (2), de groupes carboxyles reliés, de préférence 0,5 à 10 % en poids, de manière particulièrement préférée 1 à 7 % en poids et notamment 2 à 5 % en poids de groupes carboxyles reliés, par rapport à 100 % en poids de l'élastomère (2).

10. Compositions réticulables selon une ou plusieurs des revendications 1 à 9, dans lesquelles du caoutchouc nitrile carboxylé (XNBR), du caoutchouc nitrile carboxylé hydrogéné (HXNBR), des caoutchoucs greffés avec de l'anhydride d'acide maléique (« MAH ») à base d'EPM, d'EPDM, de HNBR, d'EVA, d'EVM, de SBR, de NR ou de BR, du caoutchouc styrène-butadiène carboxylé (XSBR), de l'AEM avec des groupes carboxyles libres, de l'ACM avec des groupes carboxyles libres ou des mélanges quelconques de ces élastomères sont utilisés en tant qu'élastomère (2).

11. Compositions réticulables selon une ou plusieurs des revendications 1 à 10, dans lesquelles un polyamide est utilisé en tant que composant (1) et un HXNBR ou un XNBR en tant que composant (2).

12. Procédé de fabrication des compositions réticulables selon une ou plusieurs des revendications 1 à 11, dans lequel tous les composants (1), (2) et (3) sont mélangés à des températures supérieures à la température de fusion ou de transition vitreuse la plus élevée du ou des polymères thermoplastiques.

13. Procédé de fabrication d'un élastomère thermoplastique à base d'un ou de plusieurs polymères thermoplastiques (1) et d'un ou de plusieurs élastomères (2) contenant des groupes carboxyles, dans lequel la composition réticulable selon une ou plusieurs des revendications 1 à 11 est soumise à un processus de mélange continu à une température qui se situe au-dessus de la température de fusion ou de transition vitreuse la plus élevée du ou des polymères thermoplastiques (1) utilisés.

14. Élastomères thermoplastiques à base d'un ou de plusieurs thermoplastes (1) et d'un ou de plusieurs élastomères (2) contenant des groupes carboxyles, ledit ou lesdits élastomères (2) contenant des groupes carboxyles étant réticulés par un système de réticulation consistant en un ou plusieurs sels de formule générale (I)
(R^{y-})_{x/y}M^{x+} (I)
dans laquelle
R^{y-} représente un radical hydrocarboné en C₁ à C₂₆ qui contient y groupes carboxyles,
y peut représenter les valeurs 1, 2, 3 ou 4,
x représente 3 ou 4 et
M représente un métal tri- ou tétravalent,
des polyamides ayant une température de fusion ou une température de transition vitreuse supérieure à 90 °C étant utilisés en tant que thermoplastes.

15. Utilisation des élastomères thermoplastiques selon la revendication 14 pour la fabrication de pièces moulées, de préférence de courroies, de joints, de manchons, de tubes, de membranes, d'amortisseurs, de profilés ou pour la co-extrusion de plastique et de caoutchouc ou pour le co-moulage par injection de pièces moulées.

16. Pièces moulées, pouvant être obtenues selon la revendication 15.
